# EUROPÄISCHE PATENTSCHRIFT

(11) **EP 1 738 449 B1**
(45) Veröffentlichungstag und Bekanntmachung des Hinweises auf die Patenterteilung: **20.08.2008**
(21) Anmeldenummer: 05717097.9
(22) Anmeldetag: 17.03.2005
(51) Int. Cl.: H02K 1/27, H02K 1/28, H02K 1/30

(54) **ROTOR EINER ELEKTRISCHEN MASCHINE**
ROTOR FOR AN ELECTRIC MOTOR
ROTOR D'UNE MACHINE ELECTRIQUE

(30) Priorität: 10.04.2004 DE 102004017716
(43) Veröffentlichungstag der Anmeldung: 03.01.2007
(73) Patentinhaber: ROBERT BOSCH GMBH, 70442 Stuttgart (DE)
(72) Erfinder: MALDENER, Klaus, 77886 Lauf (DE); WEHRLE, Andreas, 77770 Durbach (DE); WALTER, Gerd, F-67410 Rohrwiller (FR)
(86) Internationale Anmeldenummer: PCT/EP2005/051253
(87) Internationale Veröffentlichungsnummer: WO 2005/099065

(56) Entgegenhaltungen:
- DE-A1- 10 053 245
- DE-A1- 10 205 413
- DE-A1- 10 314 394
- FR-A- 2 723 490
- GB-A- 1 009 827
- PATENT ABSTRACTS OF JAPAN Bd. 010, Nr. 008 (E-373), 14. Januar 1986 (1986-01-14) & JP 60 170433 A (MITSUBISHI DENKI KK), 3. September 1985 (1985-09-03)
- PATENT ABSTRACTS OF JAPAN Bd. 012, Nr. 293 (E-645), 10. August 1988 (1988-08-10) & JP 63 069450 A (MATSUSHITA ELECTRIC IND CO LTD), 29. März 1988 (1988-03-29)
- PATENT ABSTRACTS OF JAPAN Bd. 017, Nr. 371 (E-1396), 13. Juli 1993 (1993-07-13) & JP 05 056582 A (MABUCHI MOTOR CO LTD), 5. März 1993 (1993-03-05)

## Beschreibung

### Stand der Technik

Elektrische Maschinen sind aus dem Stand der Technik wohl bekannt. Dabei sind beispielsweise permanent magnetisch erregte Gleichstrommotoren bekannt, welche elektronisch oder mechanisch kommutierbar sind. Hierbei können zwei Ausführungsarten unterschieden werden, nämlich die eine Ausführungsart, bei dem die Permanentmagnete am Stator angeordnet sind und eine andere Ausführungsart, bei der die Permanentmagnete am Rotor angebracht sind. Das kommutierte Magnetfeld zwischen dem Permanentmagneten und den am anderen Bauteil angeordneten Spulen bewirken das Drehmoment auf die Rotorwelle.

Zur Befestigung des Permanent-Ringmagneten auf einem Rotorkörper der Rotorwelle ist beispielsweise aus der EP 0 872 945 A1 bekannt, eine Klebeverbindung zu verwenden. Aufgrund von unterschiedlichen Temperaturausdehnungen der unterschiedlichen Materialien von Magnet, Klebstoff und Rotorkörper sowie aufgrund von Fertigungstoleranzen und aufgrund des bei Verwendung eines Klebstoffs notwendigen Abstands zwischen dem Magneten und der Rotorwelle/-körper, treten an den Verbindungsflächen große Materialspannungen der einzelnen Materialien (Magnet, Klebstoff, Welle) auf. Im Betrieb der elektrischen Maschine können zusätzlich große Temperaturunterschiede auftreten, was aufgrund der unterschiedlichen Ausdehnungskoeffizienten der Materialien zu Rissen bis hin zum Materialbruch führt, sodass eine Übertragung eines Drehmoments vom Magneten auf die Rotorwelle nicht mehr möglich ist. Des weiteren werden die mechanischen Eigenschaften des Klebstoffs mit zunehmender Temperatur schlechter, mit der Folge, dass der Magnet nicht mehr fest genug auf der Rotorwelle fixiert ist.

Mit der DE 10053245-A1 ist ein Anker einer elektrischen Maschine bekannt geworden, bei dem mehrere Bauteile derart auf der Rotorwelle befestigt sind, dass sie einen Formschluss miteinander bilden. Hierzu ist als ein Bauteil beispielsweise ein Halteelement mittels Presspassung auf der Motorwelle befestigt, das eine axiale Verzahnung aufweist, die mit einer korrespondierenden Stirnfläche eines Kommutators oder Magnetfeldgebers einen Formschluss bildet.

Mit der JP 60170433 A ist ein Rotor bekannt geworden, bei dem ein Ringmagnet zwischen zwei Halteelementen angeordnet ist. Die Halteelemente und der Ringmagnet weisen strukturierte Axialflächen auf, wobei eine radiale Lücke zwischen dem Ringmagnet und den Halteelementen ausgebildet ist.

### Vorteile der Erfindung

Der erfindungsgemäße Rotor einer elektrischen Maschine mit den Merkmalen des unabhängigen Anspruchs 1 hat den Vorteil, dass durch seine axial vorgespannte Befestigung der druckempfindliche Permanentmagnet auch bei großen Temperaturschwankungen ohne Zerstörung sauber zentriert zur Rotorwelle gelagert bleibt. Durch das Anformen eines radialen Rändels an den Klemmflächen der Halteelemente kann sich die Anschlagfläche des Permanentmagneten einerseits zum Ausgleich von Materialspannungen relativ zur Klemmfläche bewegen, andererseits bleibt der Permanentmagnet durch die Führungsfunktion der radialen Rillen auch bei einer solchen Relativbewegung exakt zur Rotorwelle zentriert. Dadurch können auch Werkstoffpaarungen der Anlagefläche und der Klemmfläche mit unterschiedlichen Wärmeausdehnungskoeffizienten verwendet werden, wobei eine Selbstzentrierung des Magneten durch die radiale Anordnung der Riffelung gewährleistet ist.

Durch die in den Unteransprüchen aufgeführten Maßnahmen ergeben stich vorteilhafte Weiterbildungen und Verbesserungen der im Anspruch 1 angegebenen Merkmale. Weist die radiale Ränderung in radialer Richtung verlaufende Überhöhungen auf, die in axialer Richtung keilförmig zugespritzt sind, können sich die Überhöhungen unter der Wirkung der axialen Klemmkraft leicht in die Anlageflächen des Magneten bzw. dessen Oberflächenbeschichtung eingraben und dadurch bezüglich der tangentialen (Dreh-) Richtung einen Formschluss bilden.

Ist das Halteelement mehrteilig ausgeführt und weist ein separates Ringelement auf, an dessen axialer Stirnfläche die Klemmfläche mit der radialen Rändelung angeformt ist, kann dieses Ringelement mit den radial verlaufenden Überhöhungen aus einem speziellen Werkstoff hergestellt werden, der auf das Material des Permanentmagneten abgestimmt ist. Dabei kann die Lagerung des Magneten leicht durch die Formgebung des Ringes an unterschiedliche Anwendungen, beispielsweise mit oder ohne Rotorgrundkörper, angepasst werden.

Zur axialen elastischen Lagerung des Permanentmagneten ist an dem Halteelement ein Federelement angeordnet, das die axiale Anpresskraft zwischen der Anlagefläche und der Klemmfläche erzeugt

Das Federelement ist vorzugsweise als Tellerfeder ausgebildet, die sich radial an einer Hülse und axial an einer Schulter des Halteelements abstützt und insbesondere das separate Ringelement stetig gegen den Magneten presst.

Durch den Eingriff der radial verlaufenden Überhöhungen in die Anlagefläche des Magneten wird dieser bei einer Materialausdehnung radial geführt und dadurch gleichzeitig radial zentriert. Durch den Formschluss zwischen der Klemmfläche und der Anlagefläche kann dabei trotz axial elastischer Lagerung ein recht hohes Drehmoment übertragen werden.

Für die Verwendung des Permanentmagneten als Arbeitsmagneten ist dieser aus relativ weichem und sprödem magnetischem Material hergestellt, welches sich mittels Sintern einfach als Hohlzylinder formen lässt. Für die Anwendung als Sensormagnet ist der Magnet vorzugsweise kunststoffgebunden, wobei bei beiden Ausführungen magnetische Materialien wie Eisen oder Seltene Erden Elemente, insbesondere Neodymverbindungen, verwendet werden.

Besonders günstig ist es, den Permanentmagneten an dessen Oberfläche zu beschichten, wobei insbesondere ein plastisch formbares Material wie Epoxidharz, Nickel oder Aluminium verwendet wird. Dadurch ist der Magnet einerseits vor Korrosion geschützt und weist gleichzeitig eine relativ weiche axiale Anschlagsfläche auf, in die die Klemmfläche eingreifen kann.

Hierzu wird beispielsweise die Klemmfläche - im Besonderen am Ringelement - aus einem hochharten Material, wie Stahl oder einer Invar-Legierung hergestellt, wodurch die Überhöhungen auf Grund der axialen Anpresskraft sowohl in eine weiche Beschichtung, als auch direkt in den Sinterwerkstoff, oder den kunststoffgebundenen Magneten eingreifen kann. Der Werkstoff der Überhöhungen kann dabei zusätzlich derart gewählt werden, dass dessen Temperaturausdehnungskoeffzient sehr gering ist, insbesondere in etwa gleich ist, wie der des Permanentmagneten.

In einer weiteren Ausgestaltung der Erfindung ist zwischen dem Hohlzylinder des Permanentmagneten und der Ankerwelle ein Rotorkörper angeordnet, der beispielsweise als magnetischer Rückschluss für den Permanentmagneten dient und dadurch dessen Magnetfeldstärke erhöht. Dabei kann das Ringelement mit der Klemmfläche einfach dieser Geometrie angepasst werden und auf den Umfang des Rückschlusskörpers angeordnet werden.

Die Zentrierung des Permanentmagneten wird im Betrieb des Rotors ausschließlich über die radiale Führung der Klemmfläche mit der Anschlagsfläche realisiert. Zur Vorzentrierung des Permanentmagneten bei der Montage des Ankers ist es jedoch von Vorteil, wenn der Permanentmagnet an einem radialen Bund des Halteelements, insbesondere des Ringelements oder des Rotorkörpers anliegt. In einer weiteren Ausführung kann auch eine zusätzliche radiale elastische Lagerung durch ein in radialer Richtung wirkendes Federelement gelagert werden, an dem der Permanentmagnet mit einer Innenfläche anliegt.

Aufgrund der elastischen axialen Lagerung des druckempfindlichen Magneten über die Anlageflächen und die Klemmflächen können zur dreh- und verschiebefesten Fixierung der Halteelemente auf der Ankerwelle kostengünstige und standardisierte Befestigungsverfahren, wie beispielsweise Materialumformung, Schweißen, Presspassung, Kleben oder Klemmringe angewandt werden.

Besonders günstig ist es, wenn das Halteelement einen hülsenartigen Fortsatz aufweist, mit dem das Halteelement einerseits auf der Ankerwelle gelagert ist, und andererseits zur Aufnahme des Permanentmagneten oder des Rotationskörpers dient. Eine am Halteelement angeformte axiale Schulter dient dabei gleichzeitig zur direkten oder indirekten axialen Abstützung der Anlagefläche des Permanentmagneten.

Hierzu ist an der axialen Schulter des Halteelements vorzugsweise die Klemmfläche mit den radial ausgerichteten Überhöhungen einstückig an dem Halteelement angeformt, so dass die Anlagefläche des Magneten direkt an der axialen Schulter des Halteelements anliegt. Insbesondere für die Anwendung des Permanentmagneten als Sensormagnet ist es von Vorteil, an dessen radialer Innenfläche radiale Quetschelemente anzuformen, die zur Vorzentrierung auf der Hülse des Halteelements dienen.

Ist das Halteelement, insbesondere dessen hülsenförmiger Fortsatz, aus einem magnetisch leitenden Material hergestellt, so kann dieser gleichzeitig als magnetischer Rückschlusskörper für den Permanentmagneten wirken.

Für Permanentmagneten mit einer relativ geringen axialen Ausdehnung von beispielsweise weniger als 10 mm, kann der Permanentmagnet mittels eines einzigen Halteelements befestigt werden. Dabei wird der Permanentmagnet auf der Hülse des Halteelements mittels eines federnden Klemm- oder Sperrelements gelagert, das sich axial an der Hülse abstützt und den Permanentmagneten gegen die radial gerändelte Klemmfläche am anderen Ende der Hülse gepresst.

Der erfindungsgemäße Rotor kommt vorzugsweise in einer elektrischen Maschine zum Einsatz, wobei der Permanentmagnet entweder als Arbeitsmagnet des Rotors oder als Sensormagnet für ein Drehlageerfassung verwendet wird. Durch die Lagerung über die radial gerändelte Klemmfläche ist eine verdreh- und verschiebefeste, sowie Positions-und rundlaufgenaue Befestigung des drucksensitiven Permanentmagneten auch bei großen Temperaturschwankungen gewährleistet.

### Zeichnungen

In den Zeichnungen sind verschiedene Ausführungsbeispiele einer erfindungsgemäßen Vorrichtung dargestellt und in der nachfolgenden Beschreibung näher erläutert. Es zeigen
- Figur 1: einen Schnitt durch einen erfindungsgemäßen Rotor,
- Figur 2: einen Schnitt eines weiteren Ausführungsbeispiels eines Rotors,
- Figur 3: einen Ausschnitt einer radial gerändelten Klemmfläche,
- Figur 4: einen vergrößerten Ausschnitt des Sensormagnets aus Figur 3,
- Figur 5: und
- Figur 6: eine Ansicht und einen Schnitt eines Halteelements gemäß Figur 4 und
- Figur 7: einen Schnitt durch einen Permanentmagnet gemäß Figur 4.

### Beschreibung der Ausführungsbeispiele

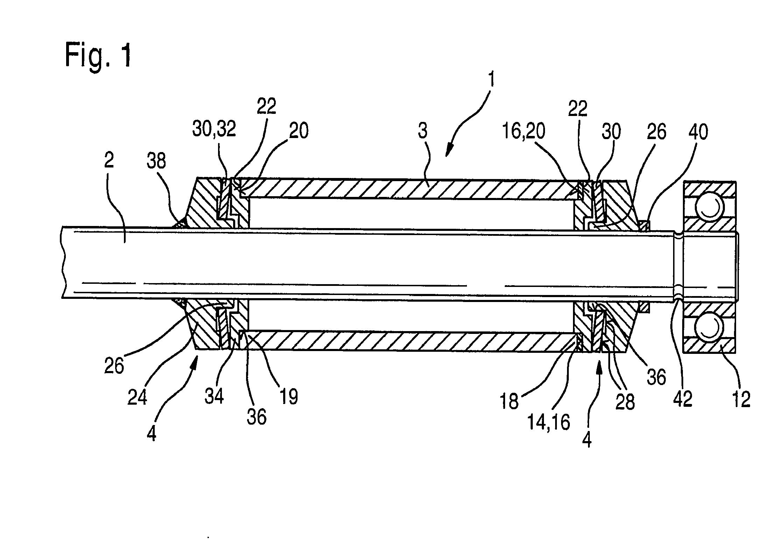

Nachfolgend wird unter Bezugnahme auf die Figur 1 ein Anker 1 gemäß einem ersten Ausführungsbeispiel der Erfindung beschrieben. In Figur 1 ist ein Rotor 1 dargestellt, der mittels Gleit- oder Kugellager 12 in einem nicht näher dargestellten Gehäuse 11 einer elektrischen Maschine 10 gelagert ist. Der Rotor 1 umfasst eine Rotorwelle 2 und einen Permanentmagnet 3, der mittels zweier Halteelemente 4 auf der Rotorwelle 2 befestigt ist. Der Permanentmagnet 3 ist beispielsweise aus Eisen oder neodymhaltigen Sintermaterial 56 hergestellt und ist näherungsweise als Hohlzylinder 5 ausgebildet. Der Permanentmagnet 3 weist eine Beschichtung 14 aus einem plastisch verformbaren Material, beispielsweise Epoxidharz oder ein weiches Metall auf, das den Permanentmagneten 3 einerseits vor Korrosion schützt und andererseits eine verformbare Oberfläche 16 bildet. An seinen beiden axialen Enden 18, 19 weist der Permanentmagnet 3 jeweils eine in etwa ringförmige Anlagefläche 20 auf, die an jeweils korrespondierenden Klemmflächen 22 der Halteelemente 4 anliegen. Die Halteelemente 4 sind in diesem Beispiel mehrteilig ausgebildet. Sie weisen einen Grundkörper 24 auf, der mittels eines axialen hülsenförmigen Teils 26 auf der Rotorwelle 2 gelagert ist. Des weiteren weist das Halteelement 4 einen axialen Bund 28 auf, an dem sich als weiteres Bauteil des Halteelements 4 ein Federelement 30 zumindest axial abstützt Im Ausführungsbeispiel ist das Federelement 30 als Tellerfeder 32 ausgebildet, die sich zusätzlich radial an der Hülse 26 des Halteelements 4 abstützt Das Federelement 30 presst ein weiteres ringförmiges Bauelement 34 des Halteelements 4 gegen die Anlagefläche 20 des Permanentmagneten 3. Das Ringelement 34 weist im Ausführungsbeispiel einen radialen Bund 36 des Halteelements 4 auf, an dem sich der Permanentmagnet 3 durch Vorzentrierung bei der Montage des Rotors 1 radial abstützt.

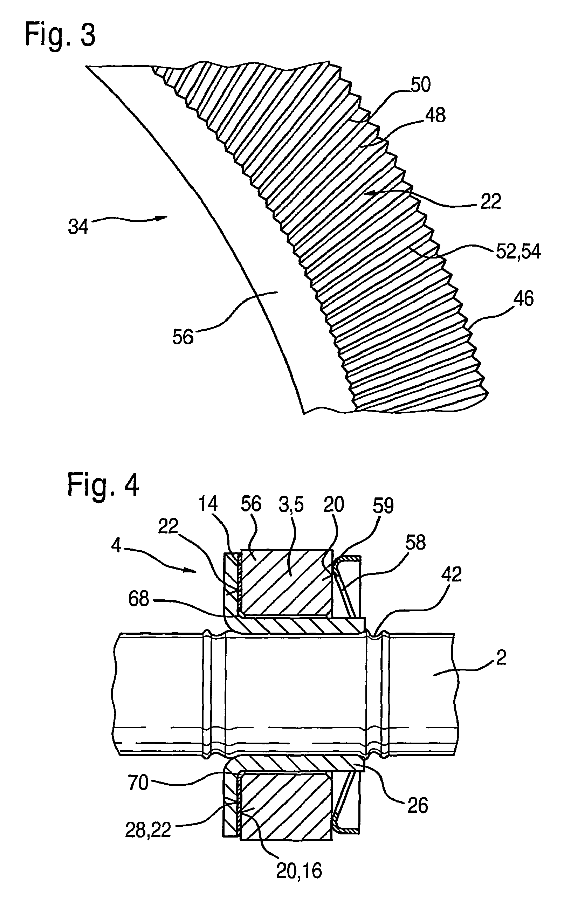

Zur Montage des Permanentmagneten 3 wird beispielsweise ein Halteelement 4 am Grundkörper 24 mittels einer Schweißnaht 38 oder eines Sicherungsrings 40 an der Rotorwelle 2 fest fixiert. Das Federelement 30 und das Ringelement 34 mit der Klemmfläche 22 sind beispielsweise als Vormontagegruppe axial auf dem Grundkörper 24 montiert. Anschließend wird der Permanentmagnet 3 und das zweite Halteelement 4 mit seinen einzelnen Bauteilen in umgekehrter Reihenfolge auf die Rotorwelle 2 aufgeschoben. Bevor das zweite Halteelement 4 an der Ankerwelle 2 befestigt wird, werden die beiden Halteelemente 4 unter einer vordefinierten Vorspannkraft entgegen den Federkräften der Federelemente 30 derart zusammengedrückt, dass der Permanentmagnet 3 allein durch die axiale Anpresskraft zwischen den Anschlagsflächen 20 und den Klemmflächen 22 gehalten wird. Die Befestigung der Halteelemente 4, sowie der Lager 12, kann alternativ auch mittels Materialumformung an der Rotorwelle 2 oder an den Halteelementen durchgeführt werden, wie dies beispielsweise mittels Rolliernuten 42, wie in Figur 3 dargestellt, realisiert ist Dabei können zur Toleranzminimierung vorteilhaft mehrere Bauteile in einem Arbeitsgang mittels Rollierscheiben fest rolliert werden.

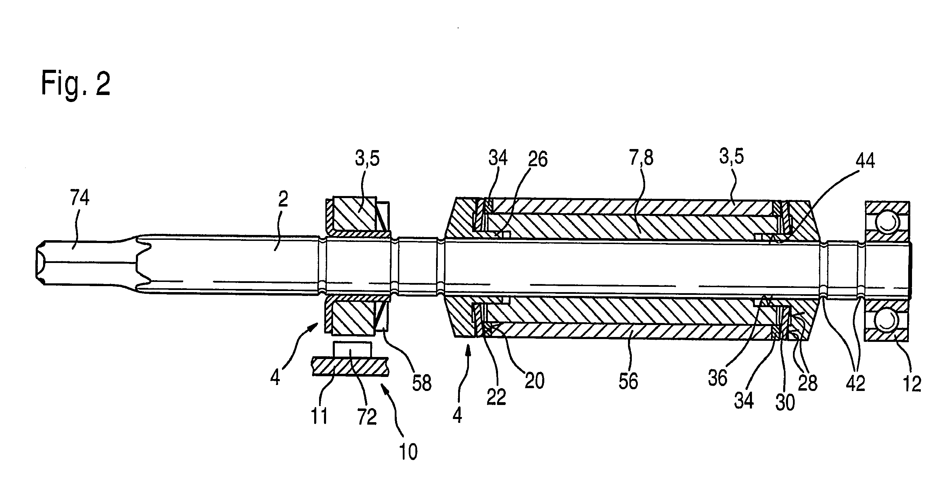

Figur 2 zeigt ein weiteres Ausführungsbeispiel eines erfindungsgemäßen Rotors 1, wobei hier zwischen dem Permanentmagneten 3 und der Rotorwelle 2 als Rotorkörper 8 ein magnetisches Rückschlusselement 7 angeordnet ist. Das Rückschlusselement 7 führt bei einem radial magnetisierten Permanentmagneten 3 zu einer Verstärkung der magnetischen Feldstärke zwischen der Rotorwelle 2 und dem Hohlzylinder 5 des Permanentmagneten 3. Bei dem andersartig magnetisierten Permanentmagneten 3 gemäß Figur 1 verlaufen die Feldlinien innerhalb des Hohlzylinders 5, so dass dort kein magnetisches Rückschlusselement 7 angeordnet ist Das magnetische Rückschlusselement 7 gemäß Figur 2 liegt mit einer Aussparung 44 an den beiden radialen Bünden 36 der Halteelemente 4 an und dient gleichzeitig als Rotorkörper 8, auf dem der Hohlzylinder 5 zur Vorzentrierung bei der Montage radial anliegt. Das Ringelement 34 des Halteelements 4 ist hierbei ebenfalls auf dem Rotorkörper 8 angeordnet und umschließt diesen, sowie die Ankerwelle 2, vollständig. Auch hier wird der Permanentmagnet 3 über seine Anlageflächen 20 und die gegenüberliegenden Klemmflächen 22 der Ringelemente 34 axial elastisch gelagert. Die Klemmfläche 22 des Halteelements 4, die hier am separaten Ringelement 34 angeformt ist, weist eine axiale Rändelung 46 auf, wie dies in Figur 3 in einem vergrößerten Ausschnitt des Ringelements 34 gemäß Figur 2 dargestellt ist.

Die Rändelung 46 in Figur 3 weist Überhöhungen 48 auf, die sich mit Rillen 50 abwechseln und sich in radialer Richtung erstrecken. Die Überhöhungen 48 weisen dabei eine scharfe Kante 52 auf, die sich im montierten Zustand in die gegenüberliegende Anlagefläche 20 des Permanentmagneten 3 eingraben. Die scharfen Kanten 52 weisen dabei eine keilförmige Spitze 54 auf, so dass die Überhöhung 48 leichter in die weichere Anlagefläche 20 eindringen. Hierzu ist das Ringelement 34 mit den Überhöhungen 48 aus einem hochfesten Werkstoff, beispielsweise Stahl oder einer Invar-Legierung, hergestellt. Der Werkstoff 56 ist dabei beispielsweise derart gewählt, dass dessen Wärmeausdehnungskoeffizient in etwa gleich ist, wie der des Permanentmagneten 3. Aber auch bei einer unterschiedlichen Temperaturausdehnung der Klemmfläche 22 und der Anlagefläche 20 wird der Permanentmagnet 3 entlang der radialen Überhöhungen 48 bei einer Relativbewegung geführt, so dass der Permanentmagnet 3 exakt zentriert zur Rotorwelle 2 bleibt.

In Figur 2 ist als weitere Ausführung eines Dauermagneten 3 ein Sensormagnet 3 dargestellt, der mittels eines einzigen Halteelements 4 auf der Rotorwelle 2 befestigt ist. Dieses Ausführungsbeispiel ist in Figur 4 vergrößert dargestellt, wobei das Halteelement 4 eine Hülse 26 aufweist, die auf der Rotorwelle 2 beispielsweise mittels Materialverformung befestigt ist. Das Halteelement 4 weist des weiteren eine axiale Schulter 28 auf, an der direkt einstöckig mit der Hülse 26 die Klemmfläche 22 mit dem radialen Rändel 46 angeformt ist. Der Permanentmagnet 3 liegt dabei axial direkt mit seiner Anlagefläche 20 an der radialen Rändelung 46 an, unter einer axialen Vorspannung, die von einem als Sperrelement 58 ausgebildeten Federelement 30 aufgebracht wird. Das Sperrelement bzw. Speed nut 58 stützt sich dabei direkt an der Hülse 26 des einen Halteelements 4 axial ab, und liegt mit seinem elastischen Bereich 59 an der zweiten Anlagefläche 20 des Permanentmagneten 3 an. Dabei kann der Permanentmagnet 3 schon vor der Montage des Halteelements 4 auf die Rotorwelle 2 komplett auf dem Halteelement 4 vormontiert werden.

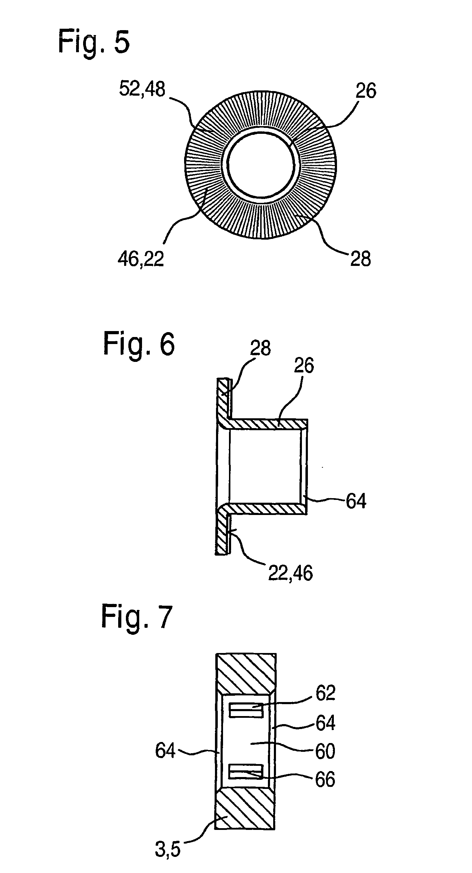

Hierzu weist der Hohlzylinder 5, der in dieser Ausführung als kunststoffgebundener Magnet 5 ausgeführt ist, an seiner radialen Innenfläche 60 Quetschelemente 62 auf, mittels derer der Permanentmagnet 3 leicht auf die Hülse 26 des in Figur 6 dargestellten Halteelements 4 gepresst wird. Zur leichteren Montage weist dabei der Hohlzylinder 5 an ihrer Innenfläche 60 Fasen 64 auf. Die Quetschelemente 62 sind dabei einstückig mit dem Permanentmagneten 3 ausgebildet und weisen eine radiale Verjüngung, beispielsweise eine radiale Spitze 66, auf. Wenn nun diese Quetschelemente 62 bei der Vormontage oder im Temperaturgang irreversibel verformt werden, wird die radiale Zentrierung des Permanentmagneten 3 durch die radial verlaufenden Überhöhungen 48 an der axialen Schulter 28 des Halteelements 4 gewährleistet. Dabei graben sich die scharfen Kanten 52 direkt in die Oberfläche 16 des relativ weichen kunststoffgebundenen Magneten 3 ein, wodurch eine Gegenführung zur radialen Ausdehnung des Hohlzylinders 5 geschaffen wird. Damit die Klemmfläche 22 dicht an der Anlagefläche 20 anliegen kann, ist durch die Fase 64 an der Innenfläche 60 des Hohlzylinders 5 Material ausgespart, so dass ein Freiraum 70 für einen Biegeradius 68 zwischen der Hülse 26 und der axialen Schulter 28 entsteht.

Der Rotor 1 ist Bestandteil einer elektrischen Maschine 10, beispielsweise eines Verstellmotors für bewegliche Teile im Kraftfahrzeug. So ist an der Rotorwelle 2 in Figur 2 als Abtriebselement 74 beispielsweise ein Abtriebsritzel 74 angeformt, das in eine nicht näher dargestellte, korrespondierende Verzahnung einer Verstellmimik greift. Zur Erzeugung eines umlaufenden äußeren Magnetfelds, das den Rotor 1 zur Drehung veranlasst, sind in einem Stator der elektrischen Maschine 10 Elektromagneten angeordnet, die über eine elektrische Kommutierung angesteuert werden. Zur Positionserfassung des Stellantriebs sind am Umfang des Sensormagneten 3 Hallsensoren 72 angeordnet, die die aufmagnetisierten Polwechsel des Hohlzylinders 5 detektieren.

Es sei angemerkt, dass hinsichtlich der in den Figuren und der Beschreibung dargestellten Ausführungsbeispiele vielfältige Kombinationsmöglichkeiten der einzelnen Merkmale untereinander möglich sind. So kann beispielsweise die konkrete Ausgestaltung der Halteelemente 4 und deren Befestigung auf der Rotorwelle 2 variiert werden. In einer alternativen Ausführung können die beiden Halteelemente 4 in einen gemeinsamen Rotorkörper 8 integriert werden, auf den der Permanentmagnet 3 axial elastisch gelagert ist. Je nach Anwendung kann die Form des Hohlzylinders 5, insbesondere dessen axiale Länge, sehr unterschiedlich ausgeführt sein, wobei die Ausführung der Halteelemente entsprechend angepasst werden kann. Ebenso können die verwendeten Werkstoffe 56 der Permanentmagneten 3, der Beschichtung 14 und der Klemmflächen 22 bzw. der Ringelemente 34 den entsprechenden Anforderungen angepasst werden. Besonders eignet sich die Erfindung für die Verwendung in Verstellantrieben für automatische Schaltgetriebe in Kraftfahrzeug.

## Patentansprüche

1. Rotor (1) einer elektrischen Maschine (10) mit mindestens einem als Hohlzylinder (5) ausgebildeten Permanentmagnet (3), der axiale Anlageflächen (20) aufweist, die mit korrespondierenden axialen Klemmflächen (22) von mindestens einem Halteelement (4) zusammenwirken, mit dem der Permanentmagnet (3) am Rotor (1) befestigt ist, wobei mindestens eine der Klemmflächen (22) eine in radialer Richtung verlaufende Rändelung (46) aufweist, **dadurch gekennzeichnet, dass** das Halteelement (4) ein Federelement (30, 32) aufweist, das die Klemmfläche (22) mit einer Anpresskraft gegen die Anlagefläche (20) presst.

2. Rotor (1) nach Anspruch 1, **dadurch gekennzeichnet, dass** die Rändelung (46) radiale Rillen (50) und axial zugespitzte Überhöhungen (48, 52) aufweist, die in radialer Richtung verlaufen.

3. Rotor (1) nach Anspruch 1 oder 2, **dadurch gekennzeichnet, dass** das Halteelement (4) ein Ringelement (34) aufweist, an dessen - zumindest der Anlagefläche (20) zugewandter - axialer Seite (28) die Klemmfläche (22) angeformt ist.

4. Rotor (1) nach Anspruch 2 oder 3, **dadurch gekennzeichnet, dass** sich die Überhöhungen (48, 52) unter der Wirkung der axialen Klemmkraft in die Anlageflächen (20) des Permanentmagneten (3) bzw. dessen Oberflächenbeschichtung eingraben.

5. Rotor (1) nach einem der vorhergehenden Anspruche, **dadurch gekennzeichnet dass** sich das Federelement (30) - insbesondere eine Tellerfeder (32) - axial und radial am Halteelement (4) abstützt und den Permanentmagneten (3) elastisch lagert.

6. Rotor (1) nach einem der vorhergehenden Ansprüche, **dadurch gekennzeichnet, dass** die radialen Überhöhungen (48, 52) in die Anlagefläche (20) des Permanentmagneten (3) eingreifen, um ein Drehmoment zwischen dem Permanentmagneten (3) und dem Halteelemente (4) zu übertragen und/oder den Permanentmagneten (3) radial zum Rotor (1) zu zentrieren.

7. Rotor (1) nach einem der vorhergehenden Ansprüche, **dadurch gekennzeichnet, dass** der Permanentmagnet (3) aus Sintermaterial oder kunststoffgebundenem Material gefertigt ist, und insbesondere Ferrit und/oder Seltene-Erden-Elemente - vorzugsweise NdFeB - enthält.

8. Rotor (1) nach einem der vorhergehenden Ansprüche, **dadurch gekennzeichnet, dass** der Permanentmagnet (3) zumindest an einer seiner Anschlagsflächen (20) eine Beschichtung (14) - insbesondere aus Epoxidharz, Nickel oder Aluminium - aufweist, die weicher ist, als der Werkstoff (56) der Überhöhungen (48, 52).

9. Rotor (1) nach einem der vorhergehenden Ansprüche, **dadurch gekennzeichnet, dass** die Überhöhungen (48, 52) aus härterem Wertstoff (56) als der Permanentmagnet (3) oder die Beschichtung (14) - insbesondere aus Stahl oder Invar - gefertigt ist und einen dem verwendeten Permanentmagneten (3) angepassten Temperaturausdehnungskoeffizienten aufweist.

10. Rotor (1) nach einem der vorhergehenden Ansprüche, **dadurch gekennzeichnet dass** der Rotor (1) eine Rotorwelle (2) und/oder einen als magnetischen Rückschluss (7) ausgebildeten Rotorkörper (8) aufweist, die von einem die Klemmfläche (22) aufweisendem Ringelement (34) umschlossen werden.

11. Rotor (1) nach einem der vorhergehenden Ansprüche, **dadurch gekennzeichnet dass** das Halteelement (4) - insbesondere dessen Ringelement 34 - einen radialen Bund (36) oder ein radial-elastisches Element aufweist, an dem sich der Permanentmagnet (3) zur radialen Vorzentrierung abstützt.

12. Rotor (1) nach einem der vorhergehenden Ansprüche, **dadurch gekennzeichnet, dass** das Halteelemente (4) auf der Rotorwelle (2) mittels Sicherungsringen (40), Federbauteilen, Laserschweißen, Kleben, Materialumformung oder Schrumpfpassung fest fixiert ist

13. Rotor (1) nach einem der vorhergehenden Ansprüche, **dadurch gekennzeichnet, dass** das Halteelement (4) als Hülse (26) mit einer axialen Schulter (28) ausgebildet ist, an der sich die Anlagefläche (20) abstutzt.

14. Rotor (1) nach einem der vorhergehenden Anspruch, **dadurch gekennzeichnet, dass** die axiale Schulter (28) als die Klemmfläche (22) ausgebildet ist.

15. Rotor (1) nach einem der vorhergehenden Ansprüche, **dadurch gekennzeichnet, dass** der Permanentmagnet (3) an seiner Innenfläche (60) - insbesondere sich radial verjüngende - Fortsätze (62) aufweist, mit denen der Permanentmagnet (3) zur Vorzentrierung auf die Hülse (26) gepresst wird.

16. Rotor (1) nach einem der vorhergehenden Ansprüche, **dadurch gekennzeichnet, dass** das Halteelemente (4) als magnetischer Rückschluss (7) ausgebildet ist.

17. Rotor (1) nach einem der vorhergehenden Ansprüche, **dadurch gekennzeichnet, dass** das Federelement (30) als speed-nut (58) ausgebildet ist, die sich direkt an der Hülse (26) abstützt und insbesondere direkt an einer der Anlageflächen (20) anliegt

18. Elektrische Maschine (10) mit einem Roter (1) nach einem der vorhergehenden Ansprüche, **dadurch gekennzeichnet dass** der Permanentmagnet (3) mit mindestens einem Hallsensor (72) oder einem um den Rotor (1) umlaufenden, elektrisch kommutierten Magnetfeld zusammenwirkt.

## Claims

1. Rotor (1) of an electric machine (10) having at least one permanent magnet (3) which is formed as a hollow cylinder (5) and which has axial contact surfaces (20) which interact with corresponding axial clamping surfaces (22) of at least one retaining element (4), by means of which retaining element (4) the permanent magnet (3) is fastened to the rotor (1), with at least one of the clamping surfaces (22) having a knurling (46) which runs in the radial direction, **characterized in that** the retaining element (4) has a spring element (30, 32) which presses the clamping surface (22) against the contact surface (20) with a pressure force.

2. Rotor (1) according to Claim 1, **characterized in that** the knurling (46) has radial grooves (50) and axially tapered elevations (48, 52) which run in the radial direction.

3. Rotor (1) according to Claim 1 or 2, **characterized in that** the retaining element (4) has an annular element (34), on whose axial side (28) - which faces at least towards the contact surface (20) - the clamping surface (22) is integrally formed.

4. Rotor (1) according to Claim 2 or 3, **characterized in that** the elevations (48, 52) dig into the contact surfaces (20) of the permanent magnet (3), or the surface coating thereof, under the action of the axial clamping force.

5. Rotor (1) according to one of the preceding claims, **characterized in that** the spring element (30) - in particular a plate spring (32) - is supported axially and radially on the retaining element (4) and elastically mounts the permanent magnet (3).

6. Rotor (1) according to one of the preceding claims, **characterized in that** the radial elevations (48, 52) engage into the contact surface (20) of the permanent magnet (3) in order to transmit a torque between the permanent magnet (3) and the retaining element (4) and/or to centre the permanent magnet (3) radially with respect to the rotor (1).

7. Rotor (1) according to one of the preceding claims, **characterized in that** the permanent magnet (3) is produced from sintered material or plastic-bound material, and in particular contains ferrite and/or rare-earth elements - preferably NdFeB.

8. Rotor (1) according to one of the preceding claims, **characterized in that** the permanent magnet (3) has, at least on one of its contact surfaces (20), a coating (14) - composed in particular of epoxy resin, nickel or aluminium - which is softer than the material (56) of the elevations (48, 52).

9. Rotor (1) according to one of the preceding claims, **characterized in that** the elevations (48, 52) are produced from harder material (56) than the permanent magnet (3) or the coating (14) - in particular from steel or from Invar steel - and has a coefficient of thermal expansion which is matched to the permanent magnet (3) which is used.

10. Rotor (1) according to one of the preceding claims, **characterized in that** the rotor (1) has a rotor shaft (2) and/or a rotor body (8) which is formed as a magnetic return path (7), which rotor shaft (2) and/or rotor body (8) are surrounded by an annular element (34) which has the clamping surface (22).

11. Rotor (1) according to one of the preceding claims, **characterized in that** the retaining element (4) - in particular its annular element (34) - has a radial collar (36) or a radially elastic element against which the permanent magnet (3) is supported for radial pre-centring.

12. Rotor (1) according to one of the preceding claims, **characterized in that** the retaining element (4) is firmly fixed to the rotor shaft (2) by means of securing rings (40), spring components, laser welding, adhesive bonding, material forming or a shrink fit.

13. Rotor (1) according to one of the preceding claims, **characterized in that** the retaining element (4) is formed as a sleeve (26) with an axial shoulder (28) against which the contact surface (20) is supported.

14. Rotor (1) according to one of the preceding claims, **characterized in that** the axial shoulder (28) is formed as the clamping surface (22).

15. Rotor (1) according to one of the preceding claims, **characterized in that** the permanent magnet (3) has - in particular radially tapering - projections (62) on its inner surface (60), by means of which projections (62) the permanent magnet (3) is pressed onto the sleeve (26) for pre-centring.

16. Rotor (1) according to one of the preceding claims, **characterized in that** the retaining element (4) is formed as a magnetic return path (7) .

17. Rotor (1) according to one of the preceding claims, **characterized in that** the spring element (30) is formed as a speed nut (58) which is supported directly against the sleeve (26) and which in particular bears directly against one of the contact surfaces (20).

18. Electric machine (10) having a rotor (1) according to one of the preceding claims, **characterized in that** the permanent magnet (3) interacts with at least one Hall sensor (72) or an electrically commutated magnetic field which revolves around the rotor (1).

## Revendications

1. Rotor (1) d'une machine électrique (10) comportant au moins un aimant permanent (3) réalisé sous la forme d'un cylindre creux (5), cet aimant permanent ayant des surfaces d'appui (20), axiales, coopérant avec des surfaces de serrage (22), axiales correspondantes d'au moins un élément de fixation (4), par lequel l'aimant permanent (3) est fixé au rotor (1), et au moins l'une des surfaces de serrage (22) a un moletage (46) dans la direction radiale,
**caractérisé en ce que**
l'élément de fixation (4) comporte un élément de ressort (30, 32) qui pousse la surface de serrage (22) par une force de poussée contre la surface d'appui (20).

2. Rotor (1) selon la revendication 1,
**caractérisé en ce que**
le moletage (46) comporte des rainures radiales (50) et des reliefs (48, 52), pointés axialement, et situés dans la direction radiale.

3. Rotor (1) selon la revendication 1 ou 2,
**caractérisé en ce que**
l'élément de fixation (4) comporte un élément annulaire (34) et la surface de serrage (22) est formée sur au moins son côté axial (28) tourné vers la surface d'appui (20).

4. Rotor (1) selon la revendication 2 ou 3,
**caractérisé en ce que**
les reliefs (48, 52) s'enfoncent sous l'effet de la force de serrage axiale dans les surfaces d'appui (20) de l'aimant permanent (3) ou de son revêtement de surface.

5. Rotor (1) selon l'une des revendications précédentes,
**caractérisé en ce que**
l'élément de ressort (30) notamment un ressort Belleville (32) est appuyé axialement et radialement contre l'élément de fixation (4) et porte de manière élastique l'aimant permanent (3).

6. Rotor (1) selon l'une des revendications précédentes,
**caractérisé en ce que**
les saillies radiales (48, 52) pénètrent dans la surface d'appui (20) de l'aimant permanent (3) pour transmettre un couple entre l'aimant permanent (3) et l'élément de fixation (4) et/ou centrer l'aimant permanent (3) radialement par rapport au rotor (1).

7. Rotor (1) selon l'une des revendications précédentes,
**caractérisé en ce que**
l'aimant permanent (3) est fabriqué en une matière frittée ou en une matière liée par de la matière plastique et contient notamment des ferrites et/ou des éléments de terres rares, de préférence NdFeB.

8. Rotor (1) selon l'une des revendications précédentes,
**caractérisé en ce que**
l'aimant permanent (3) comporte un revêtement (14) notamment en résine époxyde, nickel ou aluminium sur au moins l'une de ses surfaces d'appui (20), ce revêtement étant plus mou que le matériau (56) des saillies (48, 52).

9. Rotor (1) selon l'une des revendications précédentes,
**caractérisé en ce que**
les saillies (48, 52) sont réalisées en un matériau (56) plus dur que celui de l'aimant permanent (3) ou du revêtement (14) notamment en acier ou un Invar, et son coefficient de dilatation thermique est adapté à l'aimant permanent (3) utilisé.

10. Rotor (1) selon l'une des revendications précédentes,
**caractérisé en ce que**
le rotor (1) comporte un arbre de rotor (2) et/ou au moins un corps de rotor (8) réalisé comme retour de flux magnétique (7), pour être entouré par l'élément annulaire (34) ayant les surfaces de serrage (22).

11. Rotor (1) selon l'une des revendications précédentes,
**caractérisé en ce que**
l'élément de fixation (4) notamment son élément annulaire (34) comporte une collerette radiale (36) ou un élément radial élastique contre lequel s'appuie l'aimant permanent (3) pour un précentrage radial.

12. Rotor (1) selon l'une des revendications précédentes,
**caractérisé en ce que**
l'élément de fixation (4) est bloqué solidairement sur l'arbre de rotor (2) par des bagues de blocage (40), des pièces élastiques, par soudage par laser, collage, déformation de la matière ou ajustage avec retrait.

13. Rotor (1) selon l'une des revendications précédentes,
**caractérisé en ce que**
l'élément de fixation (4) est réalisé sous la forme d'un manchon (26) avec un épaulement axial (28) contre lequel s'appuie la surface d'appui (20).

14. Rotor (1) selon l'une des revendications précédentes,
**caractérisé en ce que**
l'épaulement axial (28) est réalisé sous la forme d'une surface de serrage (22).

15. Rotor (1) selon l'une des revendications précédentes,
**caractérisé en ce que**
sur sa surface intérieure (60) l'aimant permanent (3) comporte des prolongements (62) allant notamment en diminuant dans la direction radiale, et avec lesquels l'aimant permanent (3) est pressé sur le manchon (26) pour le précentrage.

16. Rotor (1) selon l'une des revendications précédentes,
**caractérisé en ce que**
l'élément de fixation (4) est réalisé sous la forme d'un retour de flux magnétique (7).

17. Rotor (1) selon l'une des revendications précédentes,
**caractérisé en ce que**
l'élément de ressort (30) est réalisé sous la forme d'un écrou rapide (58) qui s'appuie directement contre le manchon (26) et notamment directement contre la surface d'appui (20).

18. Machine électrique (10) équipée d'un rotor (1) selon l'une des revendications précédentes,
**caractérisée en ce que**
l'aimant permanent (3) coopère avec au moins un capteur Hall (72) ou un champ magnétique à commutation électrique autour du rotor (1).
